# EUROPÄISCHE PATENTSCHRIFT

(11) **EP 1 024 349 B1**
(45) Veröffentlichungstag und Bekanntmachung des Hinweises auf die Patenterteilung: **07.03.2007**
(21) Anmeldenummer: 00101135.2
(22) Anmeldetag: 21.01.2000
(51) Int. Cl.: G01D 15/16, G01P 1/07, G07C 5/06

(54) **Registrieranordnung, insbesondere für Fahrtschreiber**
Registering device, particularly for a tachograph
Dispositif d'enregistrement, spécialement pour enregistreur de route

(30) Priorität: 30.01.1999 DE 29901615 U
(43) Veröffentlichungstag der Anmeldung: 02.08.2000
(73) Patentinhaber: SIEMENS AKTIENGESELLSCHAFT, 80333 München (DE)
(72) Erfinder: Riester, Thomas, Dipl.-Ing. (FH), 78052 Villingen-Schwenningen (DE)

(56) Entgegenhaltungen:
- EP-A- 0 800 151

## Beschreibung

Die Erfindung betrifft eine Registrieranordnung, insbesondere für Fahrtschreiber mit einem drehbar gelagerten Schreibhebel, welcher an seinem einen Ende mit einer in Richtung der Drehachse federnden Schreibspitze versehen ist, welchem ein Lagerelement zugeordnet ist und an welchem Kupplungsmittel für dessen Antrieb befestigt sind.
Bei Fahrtschreibern mit einem vorzugsweise quaderförmigen, flachen Einbaugehäuse und beispielsweise einer dem Wechseln der als Aufzeichnungsträger verwendeten Diagrammscheiben dienenden Schublade bestehen aufgrund der relativ geringen Bauhöhe eines derartigen Gerätes erhebliche Schwierigkeiten hinsichtlich der räumlichen Anordnung der Registriermittel. Dies gilt insbesondere dann, wenn auf einer Diagrammscheibe von beiden Seiten registriert werden soll oder zwei Diagrammscheiben vorgesehen sind, zwischen die Registrierorgane eingreifen und demzufolge diese Registrierorgane in der Schublade angeordnet werden müssen.
Aufgabe der vorliegenden Erfindung war es, eine Registrieranordnung zu schaffen, die sich einerseits baulich für den geschilderten Anwendungsfall eignet und die andererseits den für Fahrtschreiber üblichen Anforderungen hinsichtlich der Großserienfertigung gerecht wird, wobei die Verringerung der Anzahl der Bauteile, gute Reproduzierbarkeit der Bauteile und eine einfache Montage der Registrieranordnung entscheidend sind.
Aus der europäischen Patentanmeldung EP 0 800 151 A2 ist bereits eine Registrieranordnung der eingangs genannten Art bekannt, welche jedoch insbesondere hinsichtlich des Schreibhebels eine in der Höhe raumgreifende Ausbildung vorsieht und insbesondere aufgrund der Bauteilevielfalt einen erhöhten Herstellungsaufwand erfordert .

Das Lösungsprinzip geht aus dem Anspruch 1 hervor. Vorteilhafte Ausgestaltungen der Erfindung sind in den Unteransprüchen beschrieben.

Die Erkenntnis, daß als Schreibhebel für die zu schaffende Registrieranordnung lediglich ein einziges, beispielsweise aus einem Blattfederwerkstoff ausgestanztes Bauteil vorgesehen werden kann, bietet sowohl eine Bauteilminimierung als auch die Möglichkeit den Schreibhebel innerhalb eines extrem flachen Bauraumes zwischen dem Aufzeichnungsträger, beispielsweise einer Diagrammscheibe, und einem Führungselement eingreifen zu lassen, wobei sich die Lagerstelle des Schreibhebels außerhalb des durch die Diagrammscheibe abgedeckten Bauraumes befindet. Mit anderen Worten, die gefundene Lösung schafft eine Integration zwischen einem federnden Schreibarm und einem starren Schreibhebel mit nur einem Bauteil, das aus einem Blattfederwerkstoff hergestellt und in geeigneter Weise geführt ist. Dabei wird die erforderliche Registrierkraft durch Verbiegen des Schreibhebels an dem stützenden, ortsfesten Führungselement aufgebracht. Das Führungselement kann im einfachsten Falle als Rippe an einer Lagerplatte ausgebildet sein oder es sind an dem Schreibhebel beidseitig Stützschenkel angeformt, die den Schreibhebel auf einer Führungsfläche abstützen.

Das bevorzugtes Ausführungsbeispiel sieht einen abgewinkelt ausgebildeten Schreibhebel vor, der sich beim Wirksamwerden der Registrierkraft mittels Stützschenkel zwischen zwei führenden Platten federnd abstützt und damit ein Verwinden des radialen Teils des Schreibhebels kompensiert. Auf diese Weise wird einerseits eine spielfreie und reibungsarme Führung sowie eine Versteifung des radialen Teils des Schreibhebels erzielt andererseits läßt sich mit der Länge des abgewinkelten Schreibarmes die Registrierkraft auf einfache Weise und innerhalb eines weiten Bereichs abstimmen. Zweckmäßigerweise ist der abgewinkelte Schreibarm entsprechend dem bogenförmigen Registrierweg der Schreibspitze ebenfalls bogenförmig ausgebildet. Zur Erzielung der Bewegungsfreiheit des Schreibarmes während des Registrierens ist in diesem Falle lediglich eine schmale, der Breite des Schreibarmes entsprechende Freisparung in dem Lagerteil des Schreibhebels erforderlich, was den Raumbedarf der vorgeschlagenen Registrieranordnung auf das kleinstmögliche Maß beschränkt.

Von Vorteil ist ferner, daß dem Schreibarm in seiner Endstellung eine Rampe zugeordnet ist, die über einen am Schreibarm angeformten Gleitschuh ein Anheben des Schreibstiftes von der Registrierebene bewirkt und die es ermöglicht, daß beim Wechseln des Aufzeichnungsträgers Beschädigungen des Aufzeichnungsträgers durch den Schreibstift vermieden werden.

Im folgenden wird das bevorzugte Ausführungsbeispiel anhand von Zeichnungen erläutert. Es zeigen:
- Figur 1: eine Draufsicht auf eine nur teilweise dargestellte Schublade eines Fahrtschreibers mit einem flachen, quaderförmigen Einbaugehäuse, wobei sich die Registrieranordnung in der Ruhestellung befindet,
- Figur 2: eine vergrößert dargestellte Draufsicht des erfindungsgemäßen Schreibhebels,
- Figur 3: eine Seitenansicht des Schreibhebels gemäß Figur 2,
- Figur 4: einen vergrößerten Teilschnitt gemäß der Schnittlinie A in Figur 1.

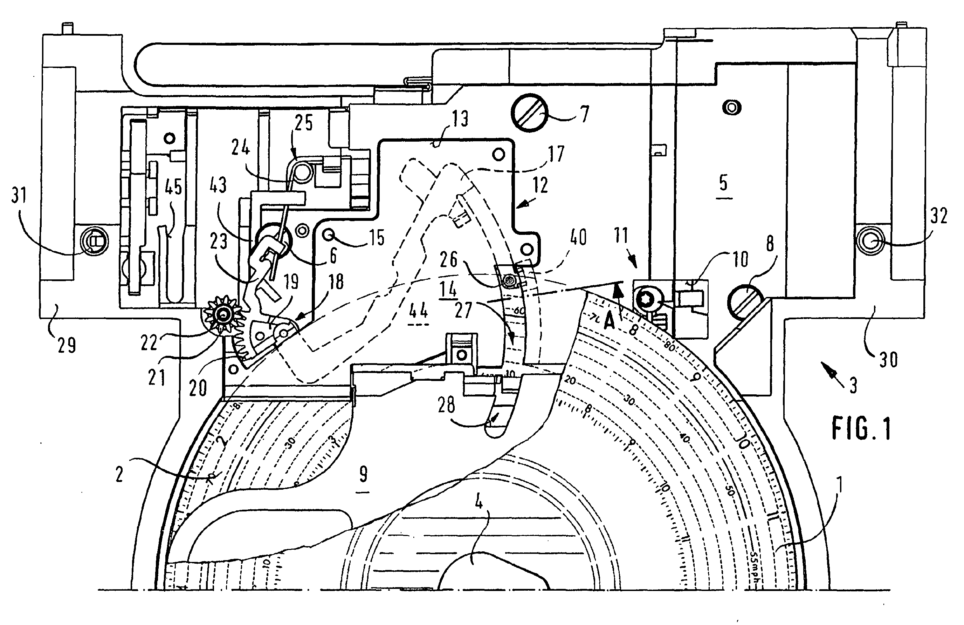

Wie aus der Figur 1 hervorgeht, wird die erfindungsgemäße Registrieranordnung in einem Fahrtschreiber verwendet, in dem gleichzeitig auf zwei Diagrammscheiben 1, 2 registriert wird, das heißt, sowohl einem Fahrer als auch einem Beifahrer eine Diagrammscheibe zugeordnet ist. Wird ein solcher Fahrtschreiber als ein beispielsweise einem Autoradio entsprechendes Einbaugerät mit einer die Diagrammscheiben 1, 2 aufnehmenden Schublade 3 konzipiert, so bestehen verständlicherweise erhebliche Schwierigkeiten hinsichtlich der Unterbringung der Antriebsmittel und Antriebsverbindungen zu dem Zentrier- und Mitnahmedorn 4 der Diagrammscheiben 1, 2, der verschiedenen auf den beiden Diagrammscheiben 1, 2 wirksamen Reigstrierorganen sowie den Mitteln zur Verriegelung, Fixierung und Entriegelung der Schublade 3 selbst.

Im Falle der vorliegenden Erfindung handelt es sich um eine Registrieranordnung, welche für das Aufzeichnen der Drehzahlen des Fahrzeugmotors auf der Rückseite der dem Fahrer zugeordneten Diagrammscheibe 1 vorgesehen ist. Das heißt, ein entsprechendes Registrierorgan muß zwischen die Diagrammscheiben 1, 2 eingreifen und zwischen den Diagrammscheiben 1, 2 wirksam sein, wobei es für die erforderliche Funktion möglichst wenig Bauhöhe beanspruchen sollte.

Im einzelnen zeigt die Figur 1 ein Lagerteil 5, welches mittels Schrauben 6, 7, 8 auf der Schublade 3 befestigt ist und der Lagerung einer Distanzplatte 9 dient, die zum Zwecke des Wechselns der untenliegenden Diagrammscheibe 2 verschwenkt werden kann und die im Hinblick auf die obenliegende Diagrammscheibe wenigstens teilweise als Registrierunterlage ausgebildet ist. Außerdem trägt die Distanzplatte 9, was, weil nicht erfindungswesentlich, nicht dargestellt ist, an ihrer der Diagrammscheibe 2 zugewandten Seite ein Registrierorgan, dessen Antriebsverbindung an dem Lagerteil 5 gelagert ist. Ein Durchbruch 10 im Lagerteil 5 macht der Antriebsverbindung zugeordnete Justier- und Mitnahmemittel 11 sichtbar.

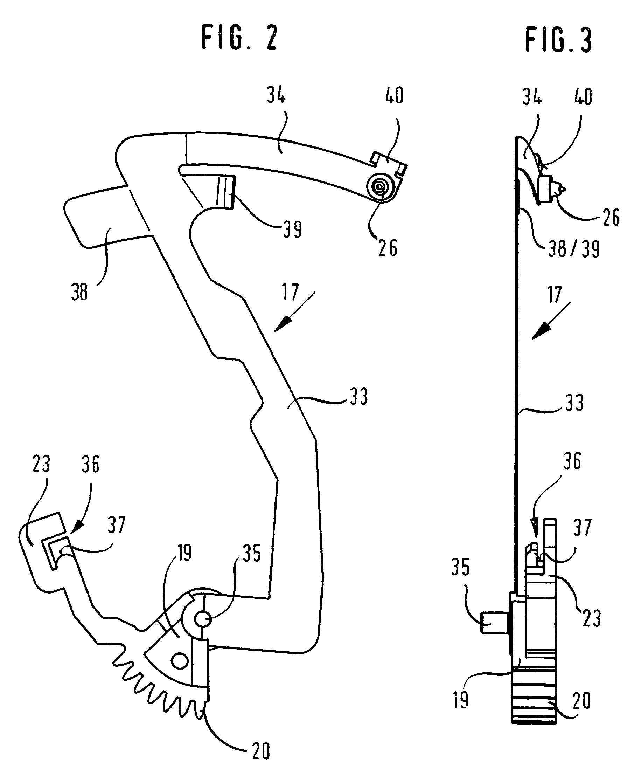

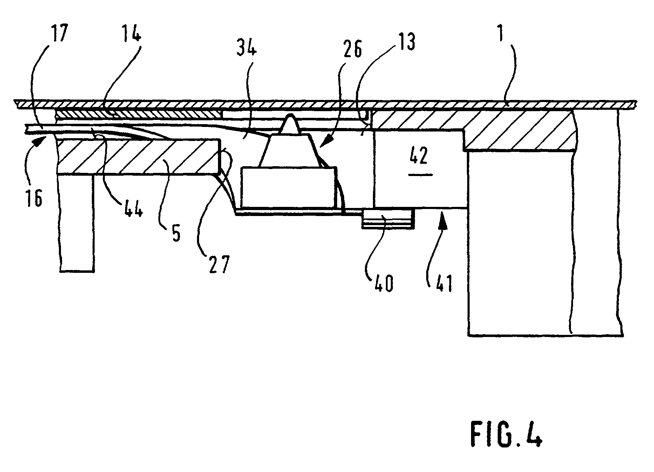

Die erfindungsgemäße Registrieranordnung 12 ist an der Gegenseite, das heißt, an der der obenliegenden Diagrammscheibe 1 zugewandten Seite des Lagerteils 5, angeordnet, wobei das Lagerteil 5 zwischen die beiden Diagrammscheiben 1 und 2 eingreift und die gebildete Registrierunterlage für die Diagrammscheibe 1 vervollständigt. Eine in dem Lagerteil 5 ausgebildete flache Vertiefung 13 ist von einer Platte 14 abgedeckt, die mittels Nietverbindungen, von denen eine mit 15 bezeichnet ist, an dem Lagerteil 5 befestigt ist. Dabei besteht zwischen dem nicht näher bezeichneten Boden der Vertiefung 13 und der Platte 14 ein flacher Schacht 16, (Figur 4), innerhalb dessen ein gemäß den Figuren 2 und 3 ausgebildeter Schreibhebel 17 der Registrieranordnung geführt ist. Wie aus der Figur 1 ferner hervorgeht ist der Schreibhebel 17 außerhalb eines durch die Diagrammscheibe 1 abgedeckten Raumes auf dem Lagerteil 5 gelagert (Lagerstelle 18). Ferner ist an dem Schreibhebel 17 ein Hebelarm 19 vorzugsweise spritzgießtechnisch angeformt, an welchem Kupplungsmittel für den Antrieb des Schreibhebels 17, in diesem Falle eine Verzahnung 20 ausgebildet sind. Mit der Verzahnung 20 in Eingriff steht ein Zahnrad 21, welches auf einer in der Schublade 3 befestigten Achse 22 gelagert ist. Mit 23 ist ein an dem Hebelarm 19 angeformter Mitnehmer bezeichnet, an dem der eine Schenkel 24 einer in geeigneter jedoch nicht näher beschriebenen Weise gelagerten und axial gesicherten Schenkelfeder 25 angreift, die für den Spielausgleich in der getrieblichen Verbindung zwischen einem nicht dargestellten, antreibenden Stellmotor und dem Schreibhebel 17 vorgesehen ist. Ferner trägt der Schreibhebel 17 eine im allgemeinen aus einer Saphirnadel und deren Fassung bestehende Schreibspitze 26. Der Schreibspitze 26 bzw. deren Bewegungsweg sind, damit die Schreibspitze 26 an der Rückseite der Diagrammscheibe 1 wirksam sein kann, im Lagerteil 5 und in der Platte 14 einerseits als auch in der Distanzplatte 9 andererseits geeignete Freisparungen 27 und 28 zugeordnet.

Der Vollständigkeit halber sei bezüglich der Schublade 3 noch erwähnt, daß mit 29 und 30 mit Schlitzen versehene Führungswangen bezeichnet sind, denen im nicht dargestellten Frontbereich der Schublade jeweils fluchtende die Führung ergänzende Wangen zugeordnet sind. 31 und 32 stellen konische Öffnungen dar, die im Zusammenwirken mit in geeigneter Weise ausgebildeten und gefedert gelagerten Zapfen der Fixierung der Schublade in deren Schließstellung dienen.

Im folgenden sei der Schreibhebel 17 anhand der Figuren 2 und 3 näher erläutert. Der Schreibhebel 17 besteht aus einem Blattfederwerkstoff und ist im wesentlichen sichelförmig ausgebildet, das heißt, an einem radialen Teilstück 33 des Schreibhebels 17, welches aufgrund von zu umgehenden Strukturen des Lagerteils 5 nicht geradlinig ausgebildet ist, ist ein Schreibarm 34 entsprechend der Bewegungsbahn der Schreibspitze 26 abgewinkelt angeformt. Das eine Ende des Schreibhebels 17, der Schreibarm 34, trägt die Schreibspitze 26; an dem anderen Ende sind, unter Vorsehung geeigneter, stabilisierende Randverstärkungen, der Hebelarm 19 und der Mitnehmer 23 einteilig angeformt sowie ein Lagerelement befestigt bzw. ebenfalls formtechnisch ausgebildet. Im Falle des dargestellten Ausführungsbeispiels dient als Lagerelement eine mit dem Schreibhebel 17 vernietete Achse 35. Zweckentsprechend wäre auch das Anformen einer Lagerbuchse. Eine an dem Mitnehmer 23 ausgeformte Kulisse 36 dient dem Schenkel 24 der Schenkelfeder 25 als seitliche Halterung; die Auflagefläche 37 des Schenkels 24 ist zur Verbesserung des Gleitverhaltens gerundet ausgebildet. An dem radialen Teilstück 33 des Schreibhebels 17 sind beidseitig Stützschenkel 38, 39 ausgebildet, die, wie bereits ausführlich in der Beschreibungseinleitung erläutert, in Wirkverbindung mit dem Lagerteil 5 und der Platte 14 stehen der Versteifung des Schreibhebels 17 bzw. des radialen Teilstücks 33 des Schreibhebels 17 dienen. Mit anderen Worten, durch Verschwenken des Schreibarmes 34 in Achsrichtung des Schreibhebels 17, das heißt, durch Aufbringen der erforderlichen Registrierkraft wird in das radiale Teilstück 33 des Schreibhebels 17 ein Drehmoment eingeleitet, welches durch die Stützschenkel 38, 39 kompensiert und dadurch ein Verkanten des Schreibhebels 17 vermieden wird. Wie außerdem den Figuren 2 und 3 noch entnommen werden kann, ist der Schreibarm 34 zur Schaffung einer Vorspannung aus der Ebene des radialen Teilstücks 33 des Schreibhebels 17 herausgebogen. Ein an dem Schreibarm 34 angeformter Gleitschuh 40 dient im Zusammenwirken mit einer an dem Lagerteil 5 ausgebildeten Rampe 41 dem Abheben der Schreibspitze 26 von der Registrierebene im Anschlagbereich des Schreibhebels 17, womit ein Beschädigen der Diagrammscheibe 1 beim Einlegen vermieden ist, und zwar, ohne daß zusätzliche Teile erforderlich sind. Mit 42 ist in Figur 4 die Aufgleitfläche der Rampe 41 bezeichnet. Als Anschlag dient ein am Lagerteil 5 ausgebildetes Wandelement 43 mit dem der Mitnehmer 23 in der Ruhestellung der Registrieranordnung 12 zusammenwirkt. Die dem Stützschenkel 39 zugeordnete Führungsfläche ist mit 44 bezeichnet.

Schließlich sei noch erwähnt, daß das Zahnrad 20 beim Schließen der Schublade 3 in Eingriff kommt mit einem gehäusefest gelagerten Zahnrad, welches beispielsweise über eine zusätzliche Getriebestufe im Kraftfluß mit dem für den Antrieb der Registrieranordnung 12 vorgesehenen Stellmotor steht. Eine in der Schublade 3 ausgebildete Nut 45 dient im Zusammenwirken mit einem gehäusefest angeordneten Bolzen als Vorausrichtung bezüglich des Ineingriffbringens der betreffenden Zahnräder der Registrieranordnung 12 beim Schließen der Schublade 3.

## Patentansprüche

1. Registrieranordnung, insbesondere für Fahrtschreiber mit einem drehbar gelagerten Schreibhebel, welcher an seinem einen Ende mit einer in Richtung der Drehachse federnden Schreibspitze versehen ist, welchem ein Lagerelement zugeordnet ist und an welchem Kupplungsmittel für dessen Antrieb befestigt sind,
**dadurch gekennzeichnet,**
**daß** der Schreibhebel (17) als ein im wesentlichen in sich federndes, flaches Bauteil ausgebildet ist und das Lagerelement (35) und die Kupplungsmittel (19, 20) an dem der Schreibspitze (26) entgegengesetzten Ende des Schreibhebels (17) angeordnet sind und
**daß** dem Schreibhebel (17) ein in einer zu dessen Bewegungsebene parallelen Ebene angeordnetes Führungselement zugeordnet ist, auf dem sich der Schreibhebel (17) wenigstens während des Registrierens abstützt.

2. Registrieranordnung nach Anspruch 1,
**dadurch gekennzeichnet,**
**daß** an dem Schreibhebel (17) wenigstens ein in Bewegungsrichtung des Schreibhebels (17) sich erstreckender und mit dem Führungselement zusammenwirkender Stützschenkel (39) angeformt ist.

3. Registrieranordnung nach Anspruch 1,
**dadurch gekennzeichnet,**
**daß** der Schreibhebel (17) aus einem Blattfederwerkstoff hergestellt ist.

4. Registrieranordnung nach Anspruch 1,
**dadurch gekennzeichnet,**
**daß** dem Schreibhebel (17) eine Rückstellfeder zugeordnet ist.

5. Registrieranordnung nach Anspruch 4,
**dadurch gekennzeichnet,**
**daß** als Rückstellfeder eine Schenkelfeder (25) vorgesehen ist und
**daß** dem einen Schenkel (24) der Schenkelfeder (25) eine in einem an dem Schreibhebel (17) angeformten Mitnehmer (23) ausgebildete Kulisse (36) zugeordnet ist.

6. Registrieranordnung nach Anspruch 1,
**dadurch gekennzeichnet,**
**daß** dem Schreibhebel (17) eine dem Anheben des Schreibstiftes (26) von der Registrierebene dienende Rampe (41) derart zugeordnet ist, daß die Rampe (41) bezogen auf das Führungselement (5) in die entgegengesetzte Richtung weist und
**daß** an dem Schreibhebel (17) ein mit der Rampe (41) zusammenwirkender Gleitschuh (40) angeformt ist.

7. Registrieranordnung nach Anspruch 1,
**dadurch gekennzeichnet,**
**daß** bei Verwendung eines Schreibhebels (17) mit einem abgewinkelt ausgebildeten Schreibarm (34) beiderseits des im wesentlichen radialen Teilstücks (33) des Schreibhebels (17) Stützschenkel (38, 39) angeformt sind, wobei der eine Stützschenkel einem in einer Parallellage zum ersten Führungselement angeordneten zweiten Führungselement zugeordnet ist und sich das zweite Führungselement auf der dem ersten Führungselement entgegengesetzten Seite des Schreibhebels (17) befindet.

8. Registrieranordnung nach Anspruch 6,
**dadurch gekennzeichnet,**
**daß** ein Lagerteil (5) vorgesehen ist mit wenigstens einer Lagerung für den Schreibhebel (17), einer als Führungselement dienenden Führungsfläche (44) für den einen Stützschenkel (39), Mitteln zum Befestigen einer das zweite Führungselement bildenden Platte (14) und einer Freisparung (27), welche ein Eintauchen des abgewinkelten Schreibarmes (34) in die Ebene der Führungsfläche (44) ermöglicht.

## Claims

1. Registering device, particularly for a tachograph having a rotatably mounted recording lever, which at one end is provided with a recording tip, which is sprung in the direction of the axis of rotation and to which a bearing element is assigned, and to which coupling means for its drive are fixed, **characterized in that** the recording lever (17) takes the form of a basically resilient, flat component and the bearing element (35) and the coupling means (19, 20) are arranged at the opposite end of the recording lever (17) to the recording tip (26), and that a guide element, which is arranged in a plane parallel to the plane of movement of said recording lever and on which the recording lever (17) rests, at least during the registering process, is assigned to the recording lever (17).

2. Registering device according to Claim 1, **characterized in that** at least one support member (39), extending in the direction of movement of the recording lever (17) and interacting with the guide element, is formed on the recording lever (17).

3. Registering device according to Claim 1, **characterized in that** the recording lever (17) is manufactured from a leaf spring material.

4. Registering device according to Claim 1, **characterized in that** a return spring is assigned to the recording lever (17).

5. Registering device according to Claim 4, **characterized in that** a torsion spring (25) is provided as return spring and that a connecting link (36) formed in a drive carrier (23) formed on the recording lever (17) is assigned to one member (24) of the torsion spring (25).

6. Registering device according to Claim 1, **characterized in that** a ramp (41) serving to raise the recording tip (26) from the registering plane is assigned to the recording lever (17) in such a way that the ramp (41) points in the opposite direction to the guide element (5) and that a slide shoe (40) interacting with the ramp (41) is formed on the recording lever (17).

7. Registering device according to Claim 1, **characterized in that**, where a recording lever (17) having an angled recording arm (34) is used, support members (38, 39) are formed on both sides of the basically radial section (33) of the recording lever (17), one support member being assigned to a second guide element arranged in a parallel position to the first guide element, and the second guide element being situated on the opposite side of the recording lever (17) to the first guide element.

8. Registering device according to Claim 6, **characterized in that** a bearing part (5) is provided, having at least one bearing for the recording lever (17), a guide face (44) serving as guide element for the support member (39), means for fixing a plate (14) forming the second guide element and a relief recess (27), which allows the angled recording arm (34) to sink into the plane of the guide face (44).

## Revendications

1. Système d'enregistrement, destiné, notamment, aux tachygraphes et comportant un levier d'inscription monté en rotation, lequel est doté à l'une de ses extrémités d'une pointe d'inscription faisant ressort dans la direction de l'axe de rotation, auquel correspond un organe de suspension et sur lequel sont fixés des moyens de couplage destinés à sa commande,
**caractérisé par le fait**
**que** le levier d'inscription (17) est conçu, pour l'essentiel, en tant que pièce plate faisant ressort et que l'organe de suspension (35) et les moyens d'accouplement (19, 20) sont disposés à l'extrémité opposée à la pointe d'inscription (26) et
**qu'**un organe de guidage, disposé dans un plan parallèle au plan de déplacement du levier d'inscription (17) et sur lequel s'appuie le levier d'inscription (17) au moins pendant l'enregistrement, correspond au levier d'inscription (17).

2. Système d'enregistrement selon la revendication 1,
**caractérisé par le fait**
**que** au moins un bras d'appui (39), s'étendant dans la direction de déplacement du levier d'inscription (17) et agissant en concourant avec l'organe de guidage, est ménagé sur le levier d'inscription (17).

3. Système d'enregistrement selon la revendication 1,
**caractérisé par le fait**
**que** le levier d'inscription (17) est fabriqué à partir d'une matière première pour ressorts à lames.

4. Système d'enregistrement selon la revendication 1,
**caractérisé par le fait**
**qu'**un ressort de rappel est affecté au levier d'inscription (17).

5. Système d'enregistrement selon la revendication 4,
**caractérisé par le fait**
**qu'**il est prévu un ressort à branches (25) en tant que ressort de rappel et
**qu'**une coulisse (36) ménagée dans un entraîneur (23) formé sur le levier d'inscription (17) est affectée à l'une des branches (24) du ressort à branches (25).

6. Système d'enregistrement selon la revendication 1,
**caractérisé par le fait**
**qu'**une rampe (41) servant à relever la pointe d'inscription (26) hors du plan d'enregistrement est disposée de manière telle que la rampe (41) est tournée dans le sens opposé par rapport à l'organe de guidage (5) et
**qu'**un patin de glissement (40) agissant en concourant avec la rampe (41) est ménagé sur le levier d'inscription (17).

7. Système d'enregistrement selon la revendication 1,
**caractérisé par le fait**
**que**, si on utilise un levier d'inscription (17) ayant un bras d'inscription (34) coudé, des bras d'appui (38, 39) sont ménagés des deux côtés de la partie (33), essentiellement radiale, du levier d'inscription (17), où l'un des bras d'appui correspond à un deuxième organe de guidage disposé dans une position parallèle au premier organe de guidage et où le deuxième organe de guidage se trouve sur le côté du levier d'inscription (17) opposé au premier organe de guidage.

8. Système d'enregistrement selon la revendication 6,
**caractérisé par le fait**
**qu'**il est prévu une pièce de suspension (5) comportant au moins une suspension pour le levier d'inscription (17), une surface de guidage (44) servant d'organe de guidage pour l'une des branches d'appui (39), des moyens permettant de fixer une plaque (14) formant le deuxième organe de guidage et une ouverture (27), qui permet au bras d'inscription (34) coudé de descendre dans le plan de la surface de guidage (44).
